# EUROPÄISCHE PATENTANMELDUNG

(11) **EP 0 956 991 A1**
(43) Veröffentlichungstag der Anmeldung: **17.11.1999**
(21) Anmeldenummer: 99104741.6
(22) Anmeldetag: 10.03.1999
(51) Int. Cl.: B60K 11/04, B60H 1/32

(54) **Kühleranordnung in einem Kraftfahrzeug**

(30) Priorität: 09.05.1998 DE 19820890
(71) Anmelder: Dr.Ing. h.c.F. Porsche Aktiengesellschaft, 70435 Stuttgart (DE)
(72) Erfinder: Schneider, Klaus, 75233 Tiefenbronn (DE)

(57) **Zusammenfassung**

Die erfindungsgemäße Kühleranordnung für ein Kraftfahrzeug besteht aus einem Kühler für den Kühlkreislauf einer Brennkraftmaschine, einem Kondensator für die Klimaanlage des Kraftfahrzeuges und einem zwischen Kondensator und Kühler angeordneten Befestigungsrahmen. Dieser Befestigungsrahmen dient zum einen zur Befestigung des Kondensators am Kühler und dichtet gleichzeitig den Zwischenraum zwischen diesen ab.

## Beschreibung

Die Erfindung betrifft eine Kühleranordnung in einem Kraftfahrzeug nach der Gattung des Hauptanspruches.

Aus der DE 39 22 814 A1 ist eine Kühleranordnung mit einem Kühler für den Kühlwasserkreislauf und einem Kondensator für eine Klimaanlage bekannt, die einen am Kraftfahrzeug befestigten Halte- und Führungsrahmen aufweist, der kastenartig aufgebaut ist. In diesen Halte- und Führungsrahmen ist der Kühler für den Kühlwasserkreislauf seitlich eingeschoben. Da dieser Rahmen zur Aufnahme des Kühlers vorgesehen ist, beansprucht er einen relativ großen Bauraum und ist aufgrund der erforderlichen Abmessungen relativ schwer. Eine Anpassung an unterschiedliche Kühler- bzw. Kondensatorgrößen kann darüber hinaus nur durch vollständige Neugestaltung des Halte- und Führungsrahmens vorgenommen werden.

Aus der DE 195 08 112 A1 ist darüber hinaus eine Kühleranordnung bekannt, bei der die fahrzeugseitige Befestigung des Kühlers für den Kühlkreislauf über einen Befestigungsrahmen aus Kunststoff besteht, der mit fahrzeugspezifischen Befestigungsgliedern versehen ist. Dieser Befestigungsrahmen weist zusätzlich eine Umfeldabdichtung für eine verbesserte Luftführung auf. Darüber hinaus weist der fahrzeugseitige Befestigungsrahmen Aufnahmen für die Befestigung einer auf der gegenüberliegenden Seite des Kühlers angeordneten Lüfterhaube auf. Die Kombination des Kühlers mit einem Klimakondensator ist hierbei nicht vorgesehen.

Der Erfindung liegt demgegenüber die Aufgabe zugrunde, eine Kühleranordnung in einem Kraftfahrzeug mit einem Kühler für den Kühlwasserkreislauf und einem Kondensator für die Klimaanlage so zu verbessern, daß diese mit geringem Bauteilaufwand und geringem Gesamtgewicht eine Befestigung des Kondensators am Kühler ermöglicht und gleichzeitig eine möglichst einfache Anpassung an verschiedene Kühler- bzw. Kondensatorgröße ermöglicht. Dabei soll insbesondere eine Größenänderung bzw. Bauformänderung eines der beiden Bauelemente, Kühler oder Kondensator, möglich sein, ohne daß am jeweils anderen Bauteil aufwendige und kostenintensive Änderungen erforderlich sind.

Diese Aufgabe wird erfindungsgemäß mit den kennzeichnenden Mitteln des Hauptanspruches gelöst. Durch Anordnung eines Befestigungsrahmens zwischen Kondensator und Kühler, der Halterungen zur direkten Befestigung am Kühler und Halterungen zur direkten Befestigung am Kondensator aufweist, ist eine Befestigung des Kondensators am Kühler möglich, die einfach zu fertigen ist und ein geringes Bauteilgewicht aufweist. Die Fertigungskosten für einen derartigen Befestigungsrahmen sind erheblich geringer als die des Kühlers bzw. Kondensators. Die Anpassung an unterschiedliche Größen bzw. Formen des Kühlers bzw. Kondensators kann durch einfache Verlagerung der entsprechenden Halterungen am Befestigungsrahmen erfolgen, so daß eine kostenintensive Anpassung des jeweils anderen Bauteiles (Kondensator bzw. Kühler) nicht erforderlich ist. Dadurch ist es beispielsweise möglich, für verschiedene Motorvarianten einer Fahrzeugbaureihe einen standardisierten Kondensator für die Klimaanlage zu verwenden, bei dem die Befestigung an unterschiedlich großen Kühlern für den Kühlkreislauf durch einfache Abänderung der entsprechenden Halterungen am Befestigungsrahmen erfolgt. Dadurch ist auf einfache und kostengünstige Weise eine weitgehende Standardisierung der aufwendigen und teuren Bauelemente möglich.

Ein besonders einfacher und kostengünstiger Aufbau der Kühleranordnung ergibt sich, wenn der Kühler auf an sich bekannte Weise aus einem Kühlerblock mit gegenüberliegenden Wasserkästen und der Kondensator aus einem Kondensatorblock mit gegenüberliegenden Kondensatorkästen gebildet ist, die jeweils mit Aufnahmen für die Halterungen am Befestigungsrahmen versehen sind. Da die Wasserkästen bzw. Kondensatorkästen zumeist als kostengünstige Formteile bzw. Tiefziehteile aus Aluminium oder Kunststoff hergestellt sind, lassen sich diese Aufnahmen mit geringem Aufwand bei der Herstellung dieser Bauelemente mit ausbilden.

Der sich im eingebauten Zustand zwischen Kühler und Kondensator einstellende Zwischenraum kann auf besonders einfache und vorteilhafte Weise durch entsprechende Ausbildung der Seitenwände des Befestigungsrahmen abgedichtet werden. Dadurch wird auf besonders zweckmäßige Weise verhindert, daß aufgrund der sich im Fahrbetrieb und/oder im Lüfterbetrieb einstellenden Sogwirkung Schmutzpartikel zwischen Kühler und Kondensator gesaugt werden bzw. sich festsetzen und damit die Leistungsfähigkeit vermindern.

Eine besonders einfache Montage der gesamten Kühleranordnung ergibt sich, wenn der Befestigungsrahmen als Rechteckrahmen ausgebildet ist und die Halterungen zur Befestigung am Kühler an zwei gegenüberliegenden Seiten und die Halterungen für den Kondensator an den beiden anderen gegenüberliegenden Seiten angeordnet sind. Dadurch ergibt sich unabhängig von der Befestigungsart eine gute Zugänglichkeit der jeweiligen Halterungen und eine hohe Steifigkeit des Gesamtverbandes.

Eine besonders einfache, leichte und kostengünstige Ausführung der Kühleranordnung ergibt sich, wenn der Kühler Mittel zur Befestigung am Kraftfahrzeug aufweist, die eine vom Befestigungsrahmen unabhängige Montage ermöglichen. Dabei ist von besonderem Vorteil, daß der Befestigungsrahmen in erster Linie an die Größe des Kondensators angepaßt wird und eine an den üblicherweise größeren Kühler angepaßte Formgebung des Befestigungsrahmens nicht erforderlich ist.

Eine besonders leichte und kostengünstige Ausführung der Kühleranordnung ergibt sich, wenn der Befestigungsrahmen aus Kunststoff gefertigt ist.

Zur Vereinfachung der Montage kann der Befestigungsrahmen auf besonders vorteilhafte Weise einstückig ausgebildet sein.

Die Halterungen am Befestigungsrahmen können dabei auf einfache Weise für die Erstellung einer Schraub- oder Rastverbindung ausgebildet werden.

Ein Ausführungsbeispiel der Erfindung ist in der nachfolgenden Beschreibung und Zeichnung näher erläutert.

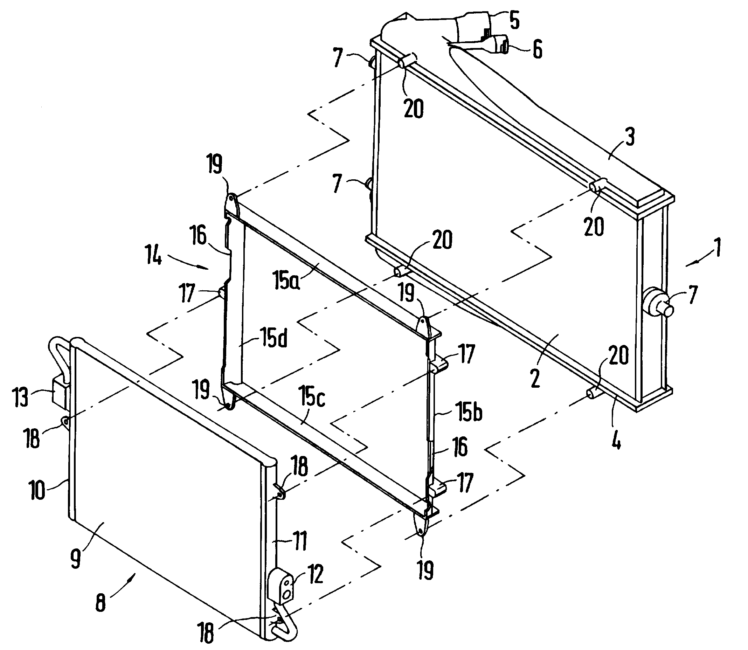

Die einzige Figur der Zeichnung zeigt eine vereinfachte, perspektivische, auseinandergezogene Darstellung der Kühleranordnung.

Der mit 1 bezeichnete Kühler für den Kühlwasserkreislauf einer Brennkraftmaschine ist auf an sich bekannte Weise aus einem Kühlerblock 2 und einem oberen bzw. unteren Wasserkasten 3 bzw. 4 aufgebaut. Der obere Wasserkasten 3 ist mit einem Zulauf 5 und einem Ablauf 6 versehen. An den beiden gegenüberliegenden Seitenflächen des Kühlerblockes 2 sind Halterungen 7 angebracht, die zur Befestigung des Kühlers am Einbauort im Kraftfahrzeug dienen.

In Fahrtrichtung des Kraftfahrzeuges vor dem Kühler 1 ist ein Kondensator 8 der Klimaanlage des Kraftfahrzeuges angeordnet, der auf an sich bekannte Weise aus einem Kondensatorblock 9 und zwei seitlichen Kondensatorkästen 10 und 11 besteht. Der Kondensatorkasten 11 ist mit einem Zulauf 12 und der Kondensatorkasten 10 mit einem Ablauf 13 versehen.

Zwischen dem Kühler 1 und dem Kondensator 8 ist ein Befestigungsrahmen 14 angeordnet, der in diesem Ausführungsbeispiel als Rechteckrahmen ausgebildet ist. Dieser Befestigungsrahmen ist in diesem Ausführungsbeispiel einstückig und aus Kunststoff gefertigt. Die vier Seitenteile 15a bis 15d sind dabei im wesentlichen als flache Rechteckprofile ausgebildet. Die Größe des Befestigungsrahmens 14 ist so an den Kondensator 8 angepaßt, daß dieser von den Seitenwänden 15a bis 15d im wesentlichen spaltfrei umfaßt wird. Zur Aufnahme des Zulaufes 12 und Ablaufes 13 sind in den Seitenteilen 15b und 15d entsprechende Ausnehmungen 16 ausgebildet. An den Außenseiten der Seitenwände 15b und 15d sind Halterungen 17 angebracht, die zur Aufnahme von nicht dargestellten Schrauben dienen. Mittels dieser nicht dargestellten Schrauben werden der Kondensator 8 und der Befestigungsrahmen 14 miteinander verbunden. Der Kondensator 8 hat dazu an den Außenseiten der Kondensatorkästen 10 und 11 als durchbohrte Laschen ausgebildete Befestigungselemente 18. Es ist jedoch auch ohne weiteres möglich, die Halterungen 17 und die korrespondierenden Befestigungselemente 18 so auszubilden, daß die Befestigung in Form von Rastverbindungen erfolgt.

An den Außenseiten der Seitenteile 15a und 15c sind in diesem Ausführungsbeispiel jeweils zwei im Bereich der Ecken angeordnete und als durchbohrte Laschen ausgebildete Halterungen 19 angebracht. Diese Halterungen 19 korrespondieren mit Befestigungselementen 20, die auf der dem Kondensator 8 zugewandten Seite des oberen bzw. unteren Wasserkastens 3 bzw. 4 ausgebildet sind. Die Halterungen 19 und die Befestigungselemente 20 dienen zur Aufnahme bzw. Durchführung von ebenfalls nicht näher dargestellten Schrauben. Es ist auch hier ohne weiteres möglich, die Halterungen 19 und die Befestigungselemente 20 so auszubilden, daß die Befestigung zwischen Kühler und Befestigungsrahmen in Form von Rastverbindungen erfolgt. Die Anordnung bzw. Abmessungen der Befestigungselemente 20 und der Halterungen 19 und die Breite der Seitenwände 15a bis 15d sind so aufeinander abgestimmt, daß der Befestigungsrahmen 14 im montierten Zustand im wesentlichen spaltfrei an der zugewandten Stirnseite des Kühlerblockes 2 anliegt.

## Patentansprüche

1. Kühleranordnung in einem Kraftfahrzeug mit einem Kühler (1) für den Kühlwasserkreislauf einer Brennkraftmaschine, mit einem Kondensator (8) für eine Klimaanlage des Kraftfahrzeuges und mit Mitteln (14) zur Befestigung des Kondensators am Kühler, dadurch gekennzeichnet, daß zwischen Kondensator (8) und Kühler (1) ein Befestigungsrahmen (14) angeordnet ist, der Halterungen (19) zur direkten Befestigung am Kühler und Halterungen (17) zur direkten Befestigung am Kondensator aufweist.

2. Kühleranordnung nach Anspruch 1, dadurch gekennzeichnet, daß der Kühler (1) aus einem Kühlerblock (2) und gegenüberliegenden Wasserkästen (3, 4) und der Kondensator (8) aus einem Kondensatorblock (9) mit gegenüberliegenden Kondensatorkästen (10, 11) gebildet ist, und daß an den Wasserkästen (3, 4) und den Kondensatorkästen (10, 11) Befestigungselemente (20 bzw. 18) ausgebildet sind, die mit den Halterungen (17, 19) des Befestigungsrahmen (14) zusammenwirken.

3. Kühleranordnung nach Anspruch 1 oder 2, dadurch gekennzeichnet, daß der Kühler (1) und der Kondensator (8) unter Ausbildung eines Zwischenraumes miteinander verbunden sind, und daß der Zwischenraum durch den Befestigungsrahmen (14) abgedichtet wird.

4. Kühleranordnung nach einem der vorangehenden Ansprüche, dadurch gekennzeichnet, daß der Befestigungsrahmen (14) als Rechteckrahmen ausgebildet ist, und daß die Halterungen (19) zur direkten Befestigung am Kühler (1) an zwei gegenüberliegenden Seiten (15a, 15c) angeordnet sind, und daß die Halterungen (17) zur direkten Befestigung am Kondensator (8) an den beiden anderen gegenüberliegenden Seiten (15b, 15d) angeordnet sind.

5. Kühleranordnung nach einem der vorangehenden Ansprüche, dadurch gekennzeichnet, daß der Kühler (1) Mittel (7) zur Befestigung am Kraftfahrzeug aufweist, die eine vom Befestigungsrahmen (14) unabhängige Montage ermöglichen.

6. Kühleranordnung nach einem der vorangehenden Ansprüche, dadurch gekennzeichnet, daß der Befestigungsrahmen (14) aus Kunststoff gefertigt ist.

7. Kühleranordnung nach einem der vorangehenden Ansprüche, dadurch gekennzeichnet, daß die Halterungen (17, 19) am Befestigungsrahmen (14) zumindest teilweise über Verschraubungen mit dem Kühler (1) und/oder dem Kondensator (8) verbunden sind.

8. Kühleranordnung nach einem der vorangehenden Ansprüche, dadurch gekennzeichnet, daß die Halterungen (17, 19) am Befestigungsrahmen (14) zumindest teilweise über Rastverbindungen mit dem Kühler (1) und/oder dem Kondensator (8) verbunden sind.

9. Kühleranordnung nach einem der vorangehenden Ansprüche, dadurch gekennzeichnet, daß der Befestigungsrahmen (14) einstückig ausgebildet ist.
